(19) **Europäisches Patentamt**

**European Patent Office**

**Office européen des brevets**

(11) Veröffentlichungsnummer : **0 323 824 B1**

(12) # EUROPÄISCHE PATENTSCHRIFT

(45) Veröffentlichungstag der Patentschrift :
**22.01.92 Patentblatt 92/04**

(51) Int. Cl.$^5$ : **F16H 15/28**

(21) Anmeldenummer : **89100015.0**

(22) Anmeldetag : **02.01.89**

(30) Priorität : **07.01.88 DE 3800170**

(43) Veröffentlichungstag der Anmeldung :
**12.07.89 Patentblatt 89/28**

(45) Bekanntmachung des Hinweises auf die
Patenterteilung :
**22.01.92 Patentblatt 92/04**

(84) Benannte Vertragsstaaten :
**FR GB IT**

(56) Entgegenhaltungen :
**EP-A- 0 207 184**
**DE-A- 2 807 971**
**US-A- 3 745 844**
**US-A- 4 314 485**

(54) Schwenkscheiben-Reibgetriebe.

(73) Patentinhaber : **Rohs, Ulrich, Dr.-Ing.**
**Roonstrasse 11**
**W-5160 Düren (DE)**

(72) Erfinder : **Rohs, Ulrich, Dr.-Ing.**
**Roonstrasse 11**
**W-5160 Düren (DE)**
Erfinder : **Heidingsfeld, Dietmar, Dipl.-Ing.**
**Bodelschwinghstrasse 36**
**W-5100 Aachen (DE)**
Erfinder : **Meuter, Herbert, Dipl.-Ing.**
**An der Weingass 24**
**W-5100 Aachen (DE)**

(74) Vertreter : **Rauh, Wolfgang K., Dipl.-Ing.**
**Patentanwalt**
**Mittelstrasse 55**
**W-5100 Aachen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 323 824 B1

## Beschreibung

Die Erfindung betrifft ein SchwenkscheibenReibgetriebe, bestehend aus je einem, ein konkaves Mantelprofil aufweisenden An- und Abtriebsteil sowie einem zwischen diesen angeordneten koaxialen, axial verstellbaren Stellring mit frei schwenkbar darin gelagerten und mit den An- und Abtriebsteilen in Reibeingriff stehenden Schwenkscheiben mit konvexem Mantelprofil, wobei eine mit dem Antriebsteil fest verbundene Antriebswelle an ihrem Ende eine mit ihr fest verbundene Kolbenplatte trägt, die von dem auf der Antriebswelle begrenzt axial verschiebbaren und mit einer Abtriebswelle fest verbundenen Abtriebsteil unter Bildung eines Kompressionsraumes übergriffen ist, und dieser Kompressionsraum mit einer Druckleitung für ein Druckmittel verbunden ist.

Aus der EP-A 0207184 ist ein Schwenkscheiben-Reibgetriebe dieser Art bekannt. Um eine weitgehend schlupffreie Bewegungsübertragung zu erreichen, ist es erforderlich, die Schwenkscheiben gegen die An- und Abtriebsteile anzudrücken. Dies geschieht zweckmäßig auf hydraulischem oder pneumatischem Wege. Bei hydraulischer Anpressung muß auf den anzudrückenden Teil ein sehr hoher Druckmitteldruck, z.B. bis 500 bar aufgebracht werden.

Aus der DE-A 2807971 ist ein anderes Schwenkscheiben-Reibgetriebe bekannt, bei dem die An- und Abtriebsteile axial unverschiebbar auf ihrer An- bzw. Abtriebswelle sitzen und Schwenkscheiben als kuppelnde Glieder an einem Stellring aufgehängt sind, der seinerseits axial gegenüber den An- und Abtriebswellen im Getriebegehäuse verschiebbar gelagert ist. Zu diesem Zweck weist der Stellring Stirnflächen auf, die als Kolbenplatten ausgebildet sind und in entsprechenden ringzylindrischen Kompressionsräumen des Getriebegehäuses bewegbar sind. Diese Kompressionsräume sind über Druckleitungen mit einer im Getriebegehäuse angeordneten Steuereinrichtung sowie einer mit der Antriebswelle verbundenen Pumpe verbunden.

Bei dieser Ausführung bildet die Pumpe ein Zusatzaggregat, das mit der Antriebswelle verbunden ist. Der erzeugte Druckmitteldruck dient der Bewegung des Stellringes, d.h. der Änderung der Getriebeübersetzung und hat keinerlei Einfluß auf den Anpreßdruck zwischen den Schwenkscheiben einerseits und den An- und Abtriebsteilen andererseits.

Der vorliegenden Erfindung liegt demgegenüber die Aufgabe zugrunde, den erforderlichen Anpreßdruck zwischen den Schwenkscheiben und den An- bzw. Antriebsteilen weitgehend verlustfrei zu übertragen und dem jeweils zu übertragenden Drehmoment anzupassen.

Die Lösung dieser Aufgabe ergibt sich erfindungsgemäß aus den kennzeichnenden Merkmalen des Anspruches 1. Danach wird der erforderliche Druck erst durch eine innerhalb der Antriebswelle angeordnete Pumpe erzeugt und der erforderliche Pumpendruck mittels einer an der Antriebswelle angeordneten Steuereinrichtung gesteuert.

Dies kann auf verschiedene Art erfolgen.

Eine Ausführungsform nach der Erfindung ist durch den Anspruch 2 gekennzeichnet. Bei der vorgesehenen Radialkolbenpumpe ergibt sich eine Förderung des Druckmittels solange, wie eine Relativdrehzahl zwischen der Eingangswelle und der Antriebswelle vorliegt. Wird die Rückleitung des Druckmittels blockiert, so baut sich druckseitig ein Druck proportional dem zu übertragenden Drehmoment auf. Hat der Druck des Druckmittels einen entsprechenden Wert erreicht, so laufen die Eingangs- und die Antriebswelle als Einheit um.

Solange die an der Steuerkurve geführten Kolben einen Hub ausführen können, ist die Eingangswelle mit der Antriebswelle gekuppelt und erzeugen die Kolben einen dem zu übertragenden Drehmoment proportionalen Druck. Erst wenn bei weiterem axialem Verschieben des Kupplungsteiles die Kolben auf der zylindrischen Steuerfläche laufen und somit keinen Hub mehr ausüben können, wird die Kupplungswirkung aufgehoben.

Eine vereinfachte Ausführungsform der Erfindung mit nur einem Pumpenkolben ist im Anspruch 3 angegeben. Hierbei befindet sich der Pumpenkolben nicht mehr im direkten Kraftfluß und erzeugt mit einem von einer Steuerkurve vorgegebenen Hub einen entsprechenden Druck des Druckmittels. Dieser Druck ist je nach Bedarf durch Änderung des Pumpenhubes steuerbar. Um den Druck nach unten korrigieren zu können, d.h. zu vermindern, ist eine hinter dem zweiten Rückschlagventil von der Druckleitung wegführende Entlastungsleitung vorgesehen, die durch ein gesteuertes Entlastungsventil sperrbar ist.

Hierzu sind in den übrigen Unteransprüchen weitere vorteilhafte Varianten genannt. Bei diesen Ausführungsformen wird der Druck des Druckmittels stets erst im drehenden Teil erzeugt, wodurch sich geringere Druckverluste ergeben.

Nachstehend ist die Erfindung anhand von in der Zeichnung dargestellter Ausführungsbeispiele näher erläutert. Es zeigen :

Fig. 1      eine Ausführungsform mit zwei gesteuerten Pumpenkolben und einem druckbeaufschlagten Abtriebsteil ;

Fig. 2-4      Ausführungsformen mit einem Pumpenkolben und unterschiedlich gesteuerten Entlastungsventilen und

Fig. 5    ein Ausführungsbeipiel mit einem druckbeaufschlagten Antriebsteil.

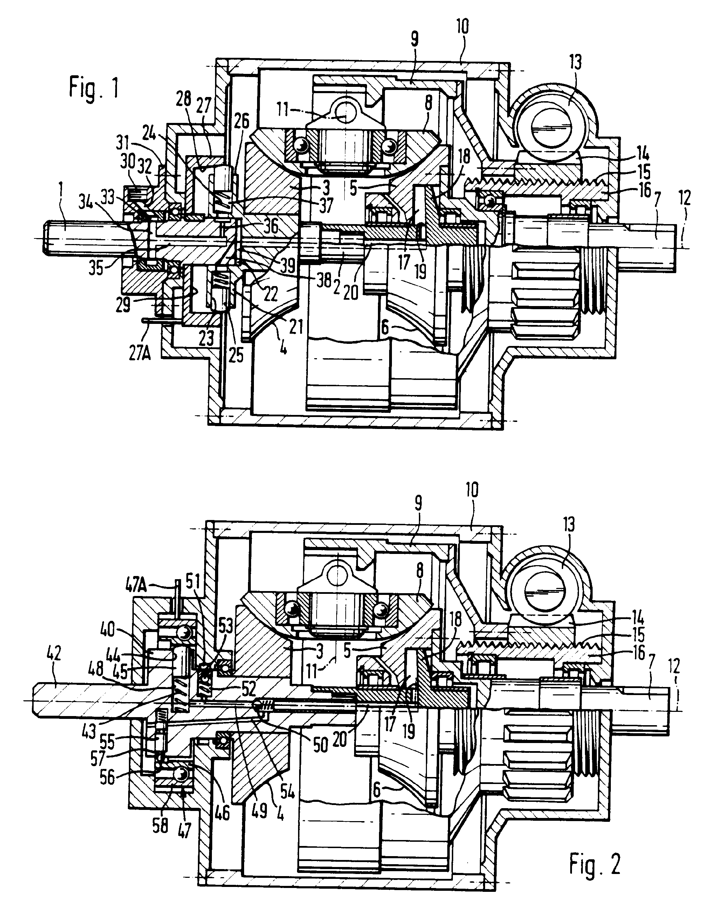

Fig. 1 zeigt ein einstufiges Schwenkscheiben-Reibgetriebe mit einer Eingangswelle 1, einer damit fluchtenden Antriebswelle 2 mit einem Antriebsteil 3, dessen kegelige Mantelfläche 4 konkav geformt ist, einem auf der Antriebswelle 2 drehbar und axial verschiebbar gelagerten Abtriebsteil 5, dessen kegelige Mantelfläche 6 ebenfalls konkav geformt ist und das mit einer im Getriebegehäuse 10 gelagerten Abtriebswelle 7 fest verbunden ist.

Das Antriebsteil 3 und das Abtriebsteil 5 sind durch Schwenkscheiben 8 miteinander kraftschlüssig verbunden, die ihrerseits schwenkbar in einem im Getriebegehäuse 10 axial bewegbaren Stellring 9 gehalten sind. Je nach der Neigung der Schwenkscheibenachsen 11 zur Drehachse 12 der An- bzw. Abtriebsteile 3 und 5 ergibt sich ein unterschiedliches, auf die Abtriebswelle 7 übertragenes Übersetzungsverhältnis.

Die axiale Verstellung des Stellringes 9 erfolgt über eine Steuerschnecke 13, die mit einem mit dem Stellring 9 fest verbundenen Schneckenrad 14 in Eingriff steht. Dieses wiederum ist auf einem Gewinde 15 eines Gehäusestutzens 16 geführt.

Wie Fig. 1 ferner zeigt, ist das Abtriebsteil 5 als Hohlkörper ausgebildet und weist in seinem Innern einen zylindrischen Hohlraum 17 auf. In diesem zylindrischen Hohlraum 17, der einen Kompressionsraum bildet und der axial zur Antriebswelle 2 bewegbar ist, ist eine fest mit dem freien Ende der Antriebswelle 2 verbundene Kolbenplatte 18 angeordnet. Vor der Kolbenplatte 18 mündet an der Stelle 19 eine Druckleitung 20 für ein Druckmittel in den Hohlraum 17.

Antriebsseitig weist die Antriebswelle 2 ein flanschartiges, fest mit ihr verbundenes Pumpengehäuse 21 auf, das antriebsseitig eine zentrische Sacklochbohrung 22 zur koaxialen, drehgleitbaren Aufnahme des abtriebsseitigen Endes der Eingangswelle 1 aufweist. In dem Pumpengehäuse 21 sind mindestens zwei radiale Zylinderbohrungen 23 angeordnet, in denen auf Druckfedern 24 nach außen abgestützte Pumpenkolben 25 geführt sind, deren radial nach außen stehende Köpfe über die Mantelfläche 26 des Pumpengehäuses 21 hinausragen.

Die Pumpenkolben 25 übergreift ein glockenartiges Kupplungsteil 27, das mit der Eingangswelle 1 umläuft und auf ihr mittels einer nicht näher dargestellten Stelleinrichtung 27A axial verschiebbar angeordnet ist. Die innere Mantelfläche 28 des Kupplungsteiles 27 weist nahe dem Boden 29 eine zunächst zylindrische und dann zum offenen Ende hin eine sich erweiternde, z.B. als exzentrische Kurvenbahn ausgebildete Steuerkurvee für die daran abgestützten Köpfe der radial beweglichen Pumpenkolben 25 auf.

Am vorderen Ende des Getriebegehäuseteiles 31 für die Eingangswelle 1 ist eine Zulauföffnung 30 für Druckmitel, z.B. Hydrauliköl, vorgesehen. Diese mündet über eine Bohrung 32 in eine Einlaßkammer 33, die über Radialbohrungen 34 in der Eingangswelle 1 mit einer axialen Zulaufleitung 35 verbunden ist. Diese mündet in eine radiale Ansaugleitung 36, die mit einen Kompressionsraum 37 verbunden ist, in dem sich die Druckfeder 24 eines der Pumpenkolben 25 befindet.

Versetzt zur Mündung der Ansaugleitung 36 um einen von der Anzahl der Pumpenkolben und/oder der Form der Steuerkurve abhängigen Drehwinkel, z.B. wie dargestellt um 180° versetzt, ist in der Eingangswelle 1 ein vom Kompressionsraum 37 zum Raum 39 zwischen den Stirnseiten der Eingangswelle 1 und der Antriebswelle 2 führender Druckkanal 38 angeordnet.

Im Betrieb wird das in die umlaufende Eingangswelle 1 drucklos zulaufende Druckmittel in die Ansaugleitung 36 geführt und von dort durch die gesteuerte Hubwirkung der Pumpenkolben 25 in den Raum 39 und von dort in die in der Antriebswelle 2 befindliche Druckleitung 20 gefördert. Der sich im Hohlraum 17 aufbauende Druck bewirkt eine axiale Schubbewegung des Abtriebsteiles 5 gegenüber der mit der Antriebswelle 2 fest verbundenen Kolbenplatte 18 gegen die Schwenkscheiben 8. Der Anpreßdruck ist dabei dem zu übertragenden Drehmoment verhältnisgleich.

Der Hohlraum 17 bildet mit der Kolbenplatte 18 zugleich ein hydrostatisches Lager und nimmt die Stützkraft auf, mit der das Kraftsystem des Getriebes geschlossen wird. Wegen der Gegenläufigkeit des Abtriebsgliedes 5 gegenüber der Kolbenplatte 18 ergeben sich allerdings Spaltundichtigkeiten und Druckverluste, die ständig von der Pumpe ausgeglichen werden müssen.

Gleichzeitig ergibt sich über das im Raum 39 befindliche Druckmittel eine Kupplungswirkung zwischen der Eingangs- und der Antriebswelle 1 bzw. 2. Diese wird erst dann aufgehoben, wenn das Kupplungsteil 27 mittels einer nicht dargestellten Stelleinrichtung 27A axial soweit gegen die Pumpenkolben 25 verschoben wird, bis diese am zylindrischen Teil der inneren Mantelfläche 28 angreifen und damit keinen Hub mehr ausführen.

Fig. 2 zeigt eine andere Ausführungsform nach der Erfindung. Mit Teilen der Fig. 1 übereinstimmende Teile sind mit den gleichen Bezugszeichen versehen und nicht noch einmal erläutert.

Bei dieser abgewandelten Ausführungsform ist anstelle einer mit der Antriebswelle 2 kuppelbaren Eingangswelle 1 eine Antriebswelle 42 vorgesehen. Die Ausführung nach Fig. 2 unterscheidet sich im wesentlichen durch die Ausführung der Pumpe und die Zuführung des Druckmittels in den Hohlraum 17.

Anstelle einer mindestens zwei Pumpenkolben aufweisenden im Kraftweg angeordneten Radialpumpe ist nun eine im Nebenschluß angeordnete Radialpumpe mit nur einem Pumpenkolben 45 vorgesehen, der in einer Zylinderbohrung 44 des fest mit der Antriebswelle 42 verbundenen Pumpengehäuses 40 angeordnet ist. Er wird von einer Druckfeder 43 radial nach außen gegen den Innenring 46 eines mittels einer nicht näher dargestellten Stelleinrichtung 47A radial verstellbaren Wälzlagers 47 gedrückt. Bei einer exzentrischen Stellung des Wälzlagers 47 in bezug auf die Antriebswelle 42 führt der Pumpenkolben 45 bei einer Umdrehung der Antriebswelle 42 einen Pumpenhub aus.

Vom Kompressionsraum 48 der die Druckfeder 43 aufnehmenden Pumpe führt ein Druckkanal 49 zur axial in der Antriebswelle 42 angeordneten und in den Hohlraum 17 mündenden Druckleitung 20. Diese weist an der Mündungsstelle des Druckkanals 49 ein durch Druckkraft zu öffnendes Rückschlagventil 50 auf.

Im Getriebegehäuse 10 ist eine Einlaßkammer 51 für drucklos zugeführtes Druckmittel angeordnet, die über eine Ansaugleitung 52 mit dem Druckkanal 49 verbunden ist. Diese Ansaugleitung 52 ist durch ein nur in Ansaugrichtung zu öffnendes Rückschlagventil 53 verschließbar.

Da bei diesem System eine Möglichkeit zur Druckkorrektur nach unten gegeben sein muß, ist eine von der Druckleitung 20 in einen Sumpf oder dgl. führende Entlastungsleitung 54 vorgesehen, die durch ein gesteuertes Entlastungsventil 55 abschließbar ist.

Dieses gesteuerte Entlastungsventil 55 ist als federbelastetes Kolbenventil ausgebildet, dessen radial aus dem Pumpengehäuse 40 herausragende Kolbenstange 57 mit einer sich radial bewegenden Steuerkurve 56 in kraftschlüssiger Verbindung steht.

Bei der vorliegenden Ausführungsform ist diese Steuerkurve 56 einstückig mit dem mit dem Pumpenkolben 45 umlaufenden Innenring 46 des radial verstellbaren Wälzlagers 47 verbunden.

Im Betrieb wird mittels der radialen Hubbewegung des Pumpenkolbens 45 Druckmittel aus der Einlaßkammer 51 angesaugt und in die Druckleitung 20 gedrückt. Über geeignete, nicht dargestellte die Anpressung der Getriebeteile messende Sensoren ist es möglich, die Hubbewegung des Pumpenkolbens 45, und damit den erzeugten Druck durch radiale Verstellung des Wälzlagers 47 zu beeinflussen. Um diesen Druck vermindern zu können, wird entsprechend der Stellung des Wälzlagers 47 und der maßgebenden Steuerkurve 56 durch Öffnen des Entlastungsventils 55 ein Ablassen des Druckmittels aus der Druckleitung 20 in die Entlastungsleitung 54 bewirkt.

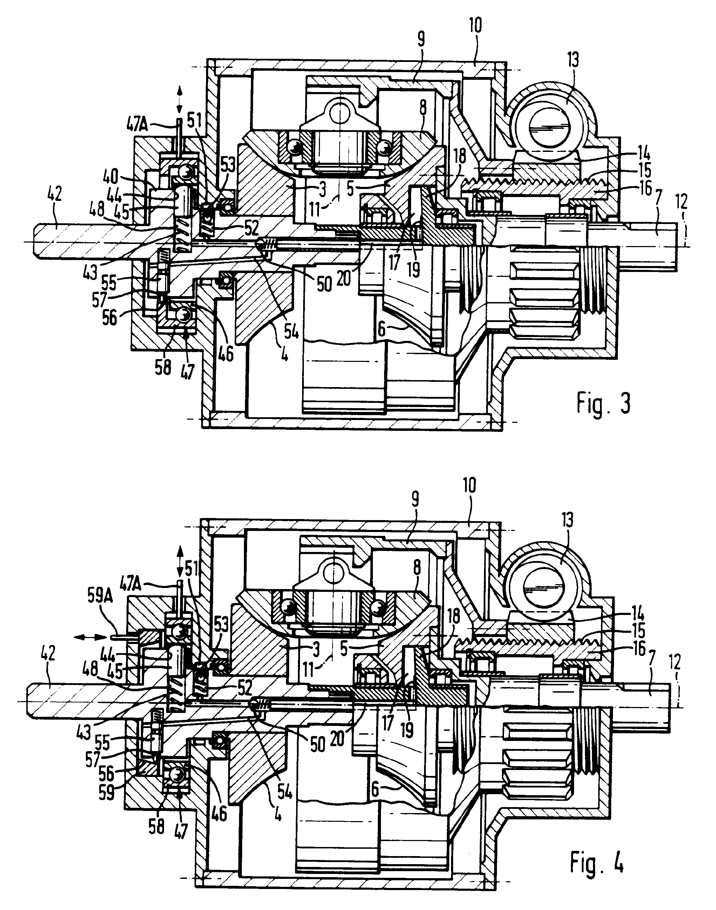

Die Ausführungsform der Fig. 3 unterscheidet sich von derjenigen nach Fig. 2 lediglich dadurch, daß hier die Kolbenstange 57 des Entlastungsventils 55 auf einer Steuerkurve 56 geführt ist, die fest mit dem Außenring 58 des radial verstellbaren Wälzlagers 47 verbunden ist.

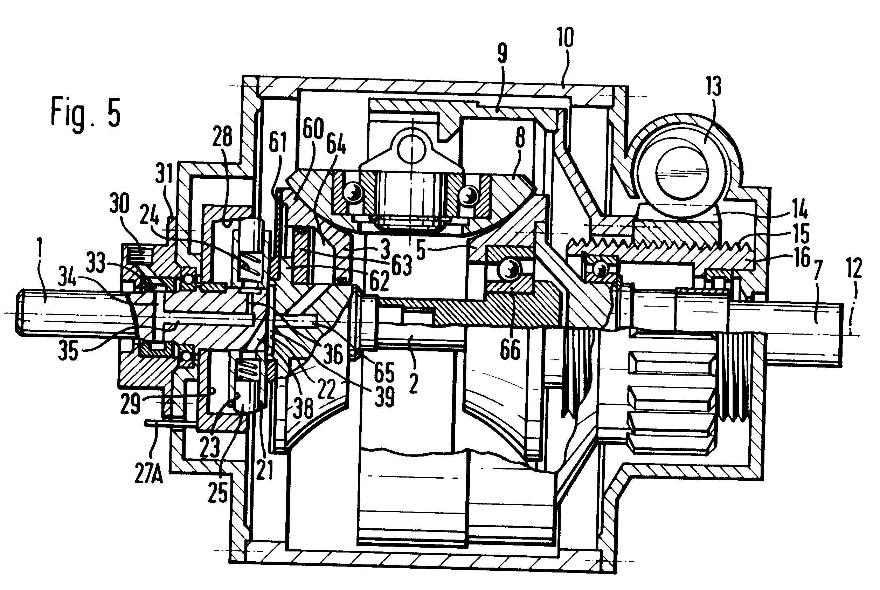

Bei der Ausführungsform nach Fig. 4, die im übrigen denjenigen nach den Fig. 2 und 3 gleicht, ist vorgesehen, daß die Steuerkurve 56 der Kolbenstange 58 des Entlastungsventils 55 die innere Mantelfläche eines axial im Getriebegehäuse 10 verschiebbaren zentrischen Ringes 59 ist, der mittels einer nicht weiter dargestellten Stelleinrichtung 59A bewegbar ist. Diese innere Mantelfläche weist ein im Längsschnitt etwa konisches Profil auf.

Fig. 5 zeigt an einem abgewandelten Ausführungsbeispiel mit einer Mehrkolbenpumpe ähnlich der in Fig. 1 dargestellten Ausführungsform, daß es auch möglich ist, das Antriebsteil 3 anstelle des Abtriebsteiles 5 durch Druckbeaufschlagung axial zu verschieben und gegen die Schwenkscheiben anzudrücken. Dies gilt im übrigen auch für die in den Fig. 2 bis 4 dargestellten Pumpenarten.

Im dargestellten Beispiel entspricht die Pumpenanordnung derjenigen der Fig. 1. Bei dieser Ausführungsform ist das Antriebsteil 3 als Hohlkörper ausgebildet und besteht aus einer auf der Antriebswelle 2 axial verschiebbaren, mit dieser umlaufenden glockenförmigen Mantelfläche 60 mit konkavem Profil, die durch einen federelastischen, dünnwandigen Boden 61 abgeschlossen ist. Dieser Boden 61 ist so ausgebildet und angeordnet, daß er einen geringen axialen Federweg gestattet und sich an der Rückseite eines Bundes 62 der Antriebswelle 2 abstützt.

An der Vorderseite des Bundes 62 ist eine auf der Antriebswelle 2 sitzende, mit dieser umlaufende Kolbenplatte 63 angeordnet, die mit dem Boden 61 einen zylindrischen Hohlraum 64 begrenzt. In diesen Hohlraum 64 mündet die Druckleitung 65. Um das Kräftesystem zu schließen, ist das Abtriebsglied 5 mittels eines Wälzlagers 66 auf der Antriebswelle 2 gelagert und axial abgestützt.

Diese Ausführung hat den Vorteil, daß wegen des Gleichlaufes der Kolbenplatte 63 und der Profilscheibe 60 eine bessere Abdichtung möglich ist. Allerdings muß die Stützkraft vom Wälzlager 66 aufgenommen werden.

## Patentansprüche

1. Schwenkscheiben-Reibgetriebe, bestehend aus je einem, ein konkaves Mantelprofil aufweisenden An- und Abtriebsteil (3, 5) sowie einem zwischen diesen angeordneten koaxialen, axial verstellbaren Stellring (9) mit frei schwenkbar darin gelagerten und mit den An- und Abtriebsteilen (3, 5) in Reibeingriff stehenden Schwenkscheiben (8) mit konvexem Mantelprofil, wobei eine mit dem Antriebsteil (3) fest verbundene Antriebswelle (2) an ihrem Ende eine mit ihr fest verbundene Kolbenplatte (18) trägt, die von dem auf der Antriebswelle (2) begrenzt axial verschiebbaren und mit einer Abtriebswelle fest verbundenen Abtriebsteil (5) unter Bildung eines Kompressionsraumes (17) übergriffen ist, und dieser Kompressionsraum (17) mit einer Druckleitung (20) für ein Druckmittel verbunden ist, **dadurch gekennzeichnet,** daß der Antriebsstrang zur Erzeugung des für die axiale Verstellung des Abtriebsteiles (5) und zur Übertragung des Reibschlusses über die Schwenkscheiben (8) ausreichenden Anpreßdruckes eine in der Antriebswelle (2) angeordnete Pumpe (21-25 ; 40-45) mit in der Antriebswelle (2) angeordneter, in den Kompressionsraum (17) mündender Druckleitung (20) sowie auf der Antriebswelle (2) eine der Pumpe (21-25 ; 40-45) zugeordnete Stelleinrichtung (27A, 47A) aufweist, die in Abhängigkeit des zu übertragenden Drehmomentes arbeitet.

2. Schwenkscheiben-Reibgetriebe nach Anspruch 1, **dadurch gekennzeichnet**, daß die Pumpe als drehschieberartige Radialkolbenpumpe ausgebildet ist, derart, daß das Antriebsteil (3) des Schwenkscheiben-Reibgetriebes antriebsseitig ein fest mit ihm verbundenes Pumpengehäuse (21) trägt, das antriebsseitig eine Sacklochbohrung (22) zur drehgleitbaren Aufnahme des freien Endes einer mit der Antriebswelle (2) kuppelbaren Eingangswelle (1) sowie mindestens zwei radiale Zylinderbohrungen (23) für darin auf Druckfedern (24) abgestützte Pumpenkolben (25) aufweist, die über die Mantelfläche (26) des Pumpengehäuses (21) hinausragen, daß die Eingangswelle (1) ein mit ihr umlaufendes, jedoch axial verschiebbares und die Pumpenkolben (25) übergreifendes, glockenartiges Kupplungteil (27) trägt, dessen innere Mantelfläche (28) eine zunächst zylindrische und dann eine daran zum offenen Ende hin sich erweiternde, mit den Pumpenkolben (25) kraftschlüssig verbundene Steuerkurve aufweist und daß die Eingangswelle (1) in der Radialebene der Zylinderbohrungen (23) eine radiale Ansaugleitung (36) für ein allgemein druckloses Druckmittel und, hierzu auf dem Umfang versetzt, einen zur Stirnseite der Eingangswelle (1) führenden Druckkanal (38) aufweist.

3. Schwenkscheiben-Reibradgetriebe nach Anspruch 1, **dadurch gekennzeichnet**, daß das Antriebsteil (3) des Schwenkscheiben-Reibgetriebes antriebsseitig ein fest mit ihm verbundenes, zylindrisches Pumpengehäuse (40) trägt, das eine radiale Zylinderbohrung (44) für einen auf einer Druckfeder (43) abgestützten und über die äußere Mantelfläche des Pumpengehäuses (40) hinausragenden Pumpenkolben (45) aufweist, der seinerseits kraftschlüssig mit der inneren Mantelfläche eines Innenringes (46) eines auf dem Pumpengehäuse (40) und dem Pumpenkolben (45) aufgezogenen und radial verstellbaren und im Getriebegehäuse (10) gehaltenen Wälzlagers (47) verbunden ist, daß der die Druckfeder (43) des Pumpenkolbens (45) aufnehmende Kompressionsraum (48) der Zylinderbohrung (44) ansaugseitig über ein durch Saugkraft zu öffnendes erstes Rückschlagventil (53) mit einer Ansaugleitung (52) und druckseitig über ein durch Druckkraft zu öffnendes zweites Rückschlagventil (50) mit der zum verstellbaren Abtriebsteil (5) führenden Druckleitung (20) verbunden ist und daß im Pumpengehäuse (40) hinter dem zweiten Rückschlagventil (50) eine von der Druckleitung (20) in einen Sumpf oder dgl. führende Entlastungsleitung (54) mit einem sie sperrenden, radial angeordneten Entlastungsventil (55) mit einem federbelasteten Schließglied angeordnet ist, dessen radial aus dem Pumpengehäuse (40) herausragende Kolbenstange (57) mit einer sie radial bewegenden, Steuerkurve (56) in kraftschlüssiger Verbindung steht.

4. Schwenkscheiben-Reibgetriebe nach Anspruch 3, **dadurch gekennzeichnet**, daß die Steuerkurve (56) für das Entlastungsventil (55) fest mit einem Außenring (58) des Wälzlagers (47) verbunden ist.

5. Schwenkscheiben-Reibgetriebe nach Anspruch 3, **dadurch gekennzeichnet**, daß die Steuerkurve (56) für das Entlastungsventil (55) fest mit dem Innenring (46) des Wälzlagers (47) verbunden ist.

6. Schwenkscheiben-Reibgetriebe nach Anspruch 3, **dadurch gekennzeichnet**, daß die Steuerkurve (56) für das Entlastungsventil (55) ein axial im Getriebegehäuse (10) verschiebbarer Ring (59) ist, dessen innere Mantelfläche in axialer Richtung ein teilweise konisches Profil aufweist.

7. Schwenkscheiben-Reibgetriebe nach einem der Ansprüche 1 bis 6, **dadurch gekennzeichnet**, daß das als Hohlkörper ausgebildete Abtriebsteil (5) einen dünnen, federelastischen Boden (61) aufweist, der an der Abtriebswelle (7) abgestützt ist.

## Claims

1. Pivot disc friction drive, comprising a driving member (3) and a driven member (5), each having a concave surface profile, a coaxial, axially adjustable setting ring (9), which is disposed between said members and is provided with pivot discs (8) of a convex surface profile which are freely and pivotably mounted therein and are in frictional engagement with the driving and driven members (3, 5), a drive shaft (2) securely connected to the driving member (3) and having, on its end, a piston plate (18), which is securely connected thereto and which is engaged by the driven member (5), said driven member being axially displaceable on the drive shaft (2) to a limited extent and securely connected to an output shaft (7), so as to form a compression chamber (17), said compression chamber (17) being connected to a pressure line (20) for a pressure medium, characterised in that the drive line for producing the contact pressure, sufficient for the axial adjustment of the driven member (5) and for the transmission of the frictional forces via the pivot discs (8), has a pump (21-25 ; 40-45), which is disposed in the drive shaft (2) and is provided with a pressure line (20), which is disposed in the drive shaft (2) and discharges into the compression chamber (17), said drive line having an adjusting means (27A, 47A) on the drive shaft (2), which adjusting means is associated with the pump (21-25 ; 40-45) and operates in dependence on the torque to be transmitted.

2. Pivot disc friction drive according to claim 1, characterised in that the pump is a rotary-vane-type radial piston pump, such that the driving member (3) of the pivot disc friction drive has a pump housing (21), which is securely connected thereto and is provided, at the driving end, with a blind-end bore (22) for the rotatingly slidable accommodation of the free end of a primary shaft (1), which is connectable to the drive shaft (2), and said housing is also provided with at least two radial cylindrical bores (23) for pump pistons (25), which are supported therein on compression springs (24) and protrude beyond the surface (26) of the pump housing (21), in that the primary shaft (1) supports a bell-shaped coupling member (27), which rotates therewith, but is axially displaceable and engages over the pump pistons (25), the inner surface (28) of the coupling member having a cam, which is frictionally connected to the pump pistons (25) and is initially cylindrical and then widens towards the open end, and in that the primary shaft (1) is provided, in the radial plane of the cylindrical bores (23), with a radial suction line (36) for a generally pressureless pressure medium and with a pre :sure conduit (38), which extends to the end face of the primary shaft (1) so as to be offset relative to the suction line on the periphery.

3. Pivot disc friction drive according to claim 1, characterised in that the driving member (3) of the pivot disc friction drive is provided, at the driving end, with a cylindrical pump housing (40), which is securely connected thereto and has a radial cylindrical bore (44) for a pump piston (45), which is supported on a compression spring (43) and protrudes beyond the outer surface of the pump housing (40), which pump housing is, in turn, frictionally connected to the inner surface of an inner ring (46) of a radially adjustable roller bearing (47), which is fitted on the pump housing (40) and on the pump piston (45) and is retained in the drive housing (10), in that the compression chamber (48) of the cylindrical bore (44), which chamber accommodates the compression spring (43) of the pump piston (45), is connected to a suction line (52) at the suction end via a first non-return valve (53), which is to be opened by suction force, and is connected to the pressure line (20), which extends to the adjustable driven member (5), at the compression end via a second non-return valve (50), which is to be opened by compressive force, and in that a discharge line (54), which extends from the pressure line (20) into a sump or the like, is disposed in the pump housing (40) behind the second non-return valve (50) and has a radially disposed relief valve (55), which shuts-off said discharge line and is provided with a spring-loaded closure member, the piston rod (57) of said closure member protruding radially from the pump housing (40) and being frictionally connected to a cam (56), which moves said piston rod radially.

4. Pivot disc friction drive according to claim 3, characterised in that the cam (56) for the relief valve (55) is securely connected to an outer ring (58) of the roller bearing (47).

5. Pivot disc friction drive according to claim 3, characterised in that the cam (56) for the relief valve (55) is securely connected to the inner ring (46) of the roller bearing (47).

6. Pivot disc friction drive according to claim 3, characterised in that the cam (56) for the relief valve (55) is a ring (59), which is axially displaceable in the drive housing (10), the inner surface of said ring having a partially conical profile when viewed in an axial direction.

7. Pivot disc friction drive according to one of claim 1 to 6, characterised in that the driven member (5), which is a hollow body, has a thin, resilient base (61), which is supported on the output shaft (7).

## Revendications

1. Transmission à friction à disques pivotants, comportant une partie d'entraînement (3) et une partie entraînée (5) présentant un profil d'enveloppe concave, ainsi qu'une bague de réglage (9) axialement réglable, agencée coaxialement entre celles-ci, et présentant des disques pivotants (8) à profil d'enveloppe convexe, engagés par friction avec les parties d'entraînement (3) et entraînée (5) et montés dans celle-ci de façon librement pivotante, un arbre d'entraînement (2), solidaire de la partie d'entraînement (3), portant, à son extrémité, une plaque de piston (18) solidaire de celle-ci, qui est recouverte par la partie entraînée (5) solidaire d'un arbre mené et déplaçable axialement, de façon limitée, sur l'arbre d'entraînement (2), en formant un espace de compression (17), et cet espace de compression (17) étant relié à un conduit (20) pour un fluide de pression, caractérisée en ce que l'ensemble d'entraînement, pour créer la pression de pressage suffisante pour transmettre l'entraînement par friction par l'intermédiaire des disques pivotants (8) et pour le réglage axial de la partie entraînée (5), comporte une pompe (21-25 ; 40-45) agencée dans l'arbre d'entraînement (2), avec le conduit de pression (20), agencé dans l'arbre d'entraînement (2), débouchant dans l'espace de compression (17), ainsi que, sur l'arbre d'entraînement (2), un dispositif de réglage (27A, 47A) associé à la pompe (21-25 ; 40-45), qui travaille en fonction du couple à transmettre.

2. Transmission à friction à disques pivotants selon la revendication 1, caractérisée en ce que la pompe est réalisée en tant que pompe à piston radial du type à tiroirs rotatifs, de sorte que la partie d'entraînement (3) de la transmission à friction à disques pivotants porte, du côté entraînement, un carter de pompe (21) solidaire de celle-ci, qui, du côté entraînement, présente un trou borgne (22) pour la réception en glissement de l'extrémité libre d'un arbre d'entrée (1) pouvant être couplé à l'arbre d'entraînement (2), ainsi qu'au moins deux perçages cylindriques radiaux (23) pour des pistons (25) qui y sont supportés sur des ressorts de pression (24), pistons qui font saillie de la surface d'enveloppe (26) du carter de pompe (21), en ce que l'arbre d'entrée (1) porte une partie de couplage (27) en forme de cloche, tournant avec lui, en étant cependant axialement déplaçable, et recouvrant les pistons (25), partie de couplage dont la surface d'enveloppe interne (28) présente une came de commande tout d'abord cylindrique, puis s'élargissant vers l'extrémité ouverte, et reliée par adhérence aux pistons (25), et en ce que l'arbre d'entrée (1) présente, dans le plan radial des perçages cylindriques (23), un conduit d'aspiration radial (36) pour un fluide de pression généralement sans pression et, de façon décalée par rapport à celui-ci sur la périphérie, un canal de pression (38) menant à la face frontale de l'arbre d'entrée (1).

3. Transmission à friction à disques pivotants selon la revendication 1, caractérisée en ce que la partie d'entraînement (3) de la transmission à friction à disques pivotants porte, du côté entraînement, un carter de pompe (40) cylindrique, solidaire de celle-ci, qui présente un perçage cylindrique radial (44) pour un piston (45) supporté sur un ressort de pression (43) et faisant saillie de la surface d'enveloppe externe du carter de pompe (40), piston qui, de son côté, est relié par adhérence à la surface d'enveloppe interne d'une bague interne (46) d'un palier à roulement (47) maintenu dans le carter (10) de la transmission, réglable radialement, et monté sur le carter de pompe (40) et le piston (45), en ce que l'espace de compression (48) du perçage cylindrique (44), recevant le ressort de pression (43) du piston (45), est relié, du côté aspiration, par l'intermédiaire d'une première soupape antiretour (53), ouverte par la force d'aspiration, à un conduit d'aspiration (52) et, du côté pression, par l'intermédiaire d'une seconde soupape antiretour (50), ouverte par la force de pression, au conduit de pression (20) menant à la partie entraînée réglable (5), et en ce que, dans le carter de pompe (40) derrière la seconde soupape antiretour (50), est agencé un conduit de décharge (54), menant du conduit de pression (20) dans un bassin ou analogue, comportant une soupape de sûreté (55) à organe de fermeture sollicité élastiquement, agencée radialement et fermant le conduit, dont la tige de piston (57) faisant saillie radialement du carter de pompe (40) est reliée par adhérence à une came de commande (56) la déplaçant radialement.

4. Transmission à friction à disques pivotants selon la revendication 3, caractérisée en ce que la came de commande (56) pour la soupape de sûreté (55) est solidaire d'une bague externe (58) du palier à roulement (47).

5. Transmission à friction à disques pivotants selon la revendication 3, caractérisée en ce que la came de commande (56) pour la soupape de sûreté (55) est solidaire de la bague interne (46) du palier à roulement (47).

6. Transmission à friction à disques pivotants selon la revendication 3, caractérisée en ce que la came de commande (56) pour la soupape de sûreté (55) est une bague (59) axialement déplaçable dans le carter (10) de la transmission, dont la surface d'enveloppe interne présente un profil partiellement conique en direction axiale.

7. Transmission à friction à disques pivotants selon une des revendications 1 à 6, caractérisée en ce que la partie entraînée (5), réalisée en tant que corps creux, présente un fond mince souple (61), qui est appuyé sur l'arbre mené (7).

Fig. 1

Fig. 2

Fig. 3

Fig. 4

Fig. 5

EP 0 323 824 B1